# EUROPEAN PATENT APPLICATION

(11) **EP 1 017 240 A2**
(43) Date of publication of application: **05.07.2000**
(21) Application number: 99310511.3
(22) Date of filing: 23.12.1999
(51) Int. Cl.: H04N 9/04

(54) **Colour image signal generation**

(30) Priority: 31.12.1998 KR 9863811
(71) Applicant: SAMSUNG ELECTRONICS CO., LTD., Suwon-City, Kyungki-do (KR)
(72) Inventor: Ban, Young Gyun, Suwon City, Kyungki-do (KR)
(74) Representative: Geary, Stuart Lloyd

(57) **Abstract**

The effective resolution of an image sensor (10) can be increased by scanning an optical image over the sensor (10) to produce a "virtual" image sensor cell array that has greater resolution that the physical resolution of the sensor (10). Interpolation has been used to fill in gaps in the pixel array of the "virtual" image sensor. The present invention, however, avoids the need for interpolation with an improved scanning scheme. In this scheme, *de minimis,* the scanning comprises moving the optical image relative to the image sensor (10) parallel to a row of pixels in n steps, each consisting of half the pitch length of the cells in the row, where n is one less than twice the number of colours sensed in the row and the output of the sensor is taken before the first step and after each step. If the array has two-dimensions, the scanning comprises moving the optical image relative to the image sensor (10) parallel to a column in m steps, each consisting of half the pitch length of the cells in the column, where m is one less than twice the number of colours used in the column and the image is scanned parallel a row, for taking of the image sensor's output, in n steps before the first step parallel to said column and after each step parallel to said column.

## Description

The present invention relates to a method of producing an image signal using an image sensor having an array of image sensing cells and a colour filter for determining the colour to which cell of the image sensor is sensitive, the filter being arranged such that the cells of one row are each sensitive to one colour of a cyclical sequence of colours repeating along the row, the method comprising: producing an optical image on the image sensor; scanning the optical image relative to the image sensor; taking the output of the image sensor a plurality of times during said scanning; and combining said outputs to produce a single image signal. The present invention also relates to an image signal generating apparatus comprising an image sensor having an array of image sensing cells and a colour filter for determining the colour to which cell of the image sensor is sensitive, the filter being arranged such that the cells of one row are each sensitive to one colour of a cyclical sequence of colours repeating along the row, image scanning means for scanning an optical image across the image sensor and processing means, wherein the processing means is configured to control the scanning means to scan an optical image relative to the image sensor, take the output of the image sensor a plurality of times during said scanning, and combine said outputs to produce a single image signal.

In recent years, CCD (charge coupled device) stills cameras have become available. In these cameras, the output of the CCD is digitized so that the captured scene can be stored in a storage device. The image information stored in the storage device may be reproduced later using a computer system.

Additionally, such cameras may provide a user with image information which can also be stored. The stored image information can then be edited by a user, using a computer system.

Since CCD stills cameras, unlike a conventional photographic film cameras, do not need images to be developed chemically in a darkroom, a photographed image may be readily shown on the spot. Furthermore, since image information is stored electronically, the image information can be processed or transmitted to a remote computer system. Consequently, electronic stills cameras are filling a major role in the recent convergence of multimedia technologies.

Figure 1 shows the pixel arrangement of a colour filter provided in a conventional charge coupled device. Referring to Figure 1, the pixels are arranged in a 4 × 4 matrix. The first and third rows of the matrix comprise alternating green (G) and red (R) sensing pixels and the second and fourth rows of the matrix comprise alternating blue (B) and green (G) pixels.

Figure 2 illustrates a conventional method of shifting a charge coupled device.

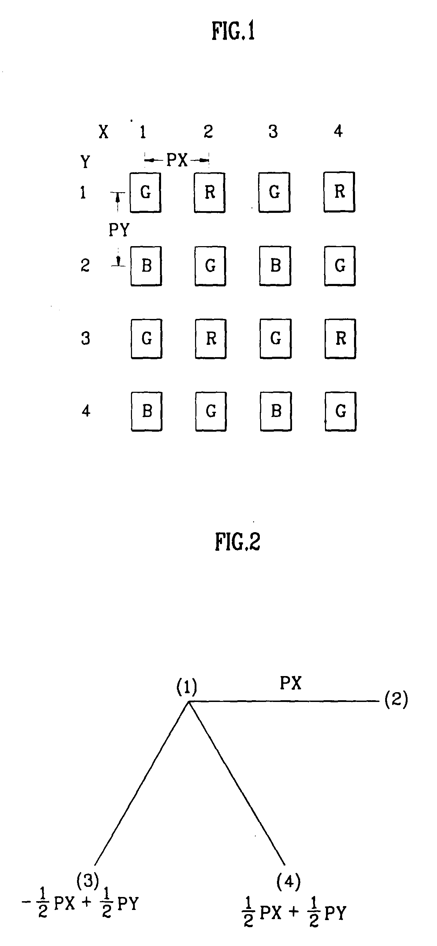

Referring to Figure 2, reference numeral (1) denotes a first position of a pixel of the CCD, reference numeral (2) denotes a second position of the pixel after it has been moved horizontally by one pixel pitch (PX), reference numeral (3) denotes a third position of the pixel after being obliquely shifted in a first direction and reference numeral (4) denotes a fourth position of the pixel after being obliquely shifted in a second direction. The third position (3) is located half of the horizontal pixel spacing (PX) to the left of the first position (1) and half of the vertical pixel spacing (PY) down from the first position (1). The fourth position (4) is located half of the horizontal pixel spacing (PX) to the right of the first position (1) and half of the vertical pixel spacing (PY) down from the first position (1).

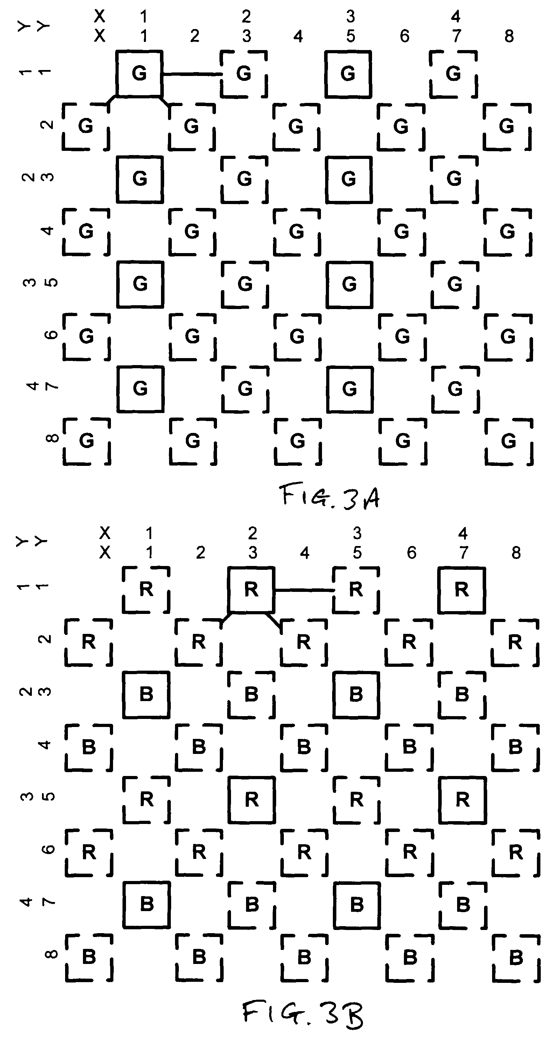

Figure 3A and Figure 3B illustrate the additional "pixels" produces by shifting the CCD as illustrated in Figure 2. Pixels drawn with a solid line denote ones that are output from the CCD in its initial position and pixels drawn with dotted lines denote ones that are newly produced according to the movement illustrated in Figure 2. In Figures 3A and 3B, the outer numbers correspond to the column and row index numbers in Figure 1.

However, some information is lacking for some of the "pixels" in Figures 1 and 3. It can be seen that, using the inner co-ordinate numbers (X, Y), there is no information for the "pixels" at (1,2), (1,4), (1,6), (1,8), (2,1), (2,3), (2,5), (2,7), (3,2), (3,4), (3,6), (3,8), (4,1), (4,3), (4,5), (4,7), (5,2), (5,4), (5,6), (5,8), (6,1), (6,3), (6,5), (6,7), (7,2), (7,4), (7,6), (7,8), (8,1), (8,3), (8,5) and (8,7) and, where there is "pixel" data, it relates only to red and green in rows 1,2, 5 and 6 and only to blue and green in 3, 4, 7 and 8. Consequently, an interpolation process is used to fill these gaps in the image signal output from the CCD.

A method according to the present invention is characterised in that the scanning comprises moving said optical image relative to the image sensor parallel to said row in n steps, each consisting of half the pitch length of the cells in said row, where n is one less than twice the number of colours in said sequence and the output of the sensor is taken before the first step and after each step.

An apparatus according to the present invention is characterised in that said scanning comprises moving said optical image relative to the image sensor parallel to said row in n steps, each consisting of half the pitch length of the cells in said row, where n is one less than twice the number of colours in said sequence and the output of the sensor is taken before the first step and after each step.

The row scanning could involve more than n steps. However, this would be wasteful and is not preferred.

Either the optical image or the image sensor can be move with respect to their common frame of reference to achieve the scanning.

Preferably, the cells of said optical sensor are arranged in a two-dimensional array, the filter is arranged such that the cells of one column are each sensitive to one colour of a further cyclical sequence of colours repeating along the column, and said scanning comprises moving said optical image relative to the image sensor parallel to a column in m steps, each consisting of half the pitch length of the cells in the column, where m is one less than twice the number of colours in said further sequence and the image is scanned parallel a row, for taking of the image sensor's output, in n steps before the first step parallel to said column and after each step parallel to said column.

Preferably, the image is scanned relative to the optical sensor boustrophedonically.

For a filter as shown in Figure 1, n is preferably 3 and m is preferably 3.

The image sensor may be a charge coupled device.

The present invention has application in digital stills cameras.

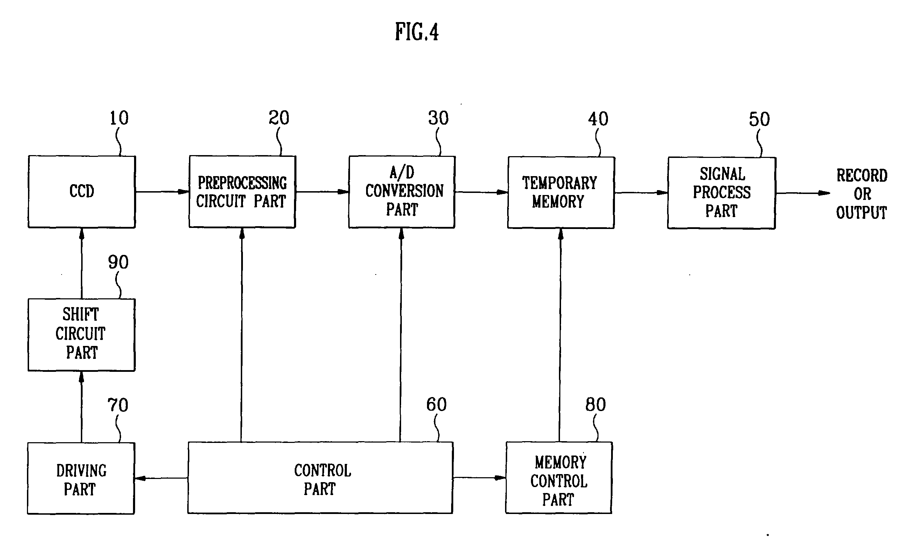

An embodiment of the present invention will now be described, by way of example, with reference to Figures 4 to 6 of the accompanying drawings, in which: -
Figure 1 shows a known colour filter arrangement for pixels of a CCD image sensor;;
Figure 2 illustrates a known method of shifting the image on a CCD image sensor as shown in Figure 1;
Figures 3A and 3B illustrate the effect of the shifting method illustrated in Figure 2;
Figure 4 is a block diagram of the image processing part of a digital stills camera embodying the present invention;

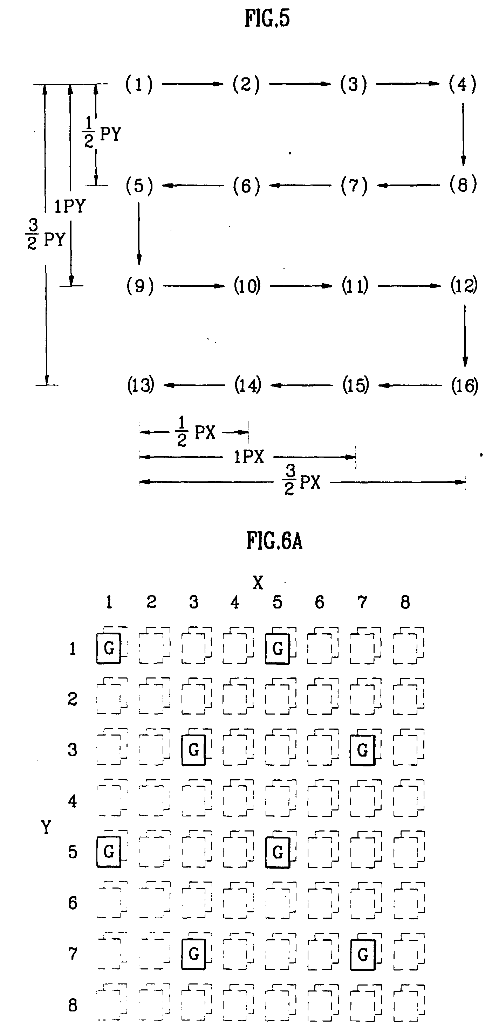

Figure 5 illustrates a method of shifting an image on a CCD according to the present invention; and

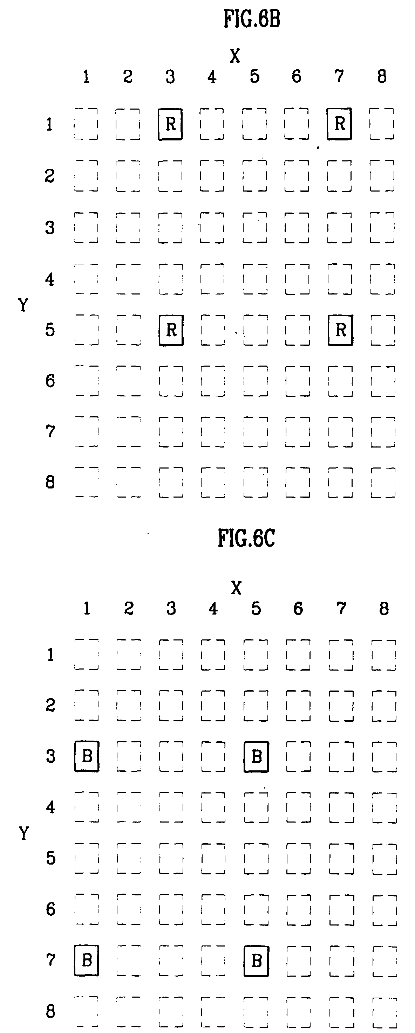

Figures 6A, 6B and 6C illustrate the effect of the shifting method illustrated in Figure 5.

Referring to Figure 4, a charge coupled device (CCD) 10 is responsive to light focused onto it by a lens to form a two-dimensional electronic image of the scene in front of the lens. The signal produced in the CCD 10 can be read out as a one-dimensional signal. A colour filter, such as that illustrated in Figure 1, overlies the CCD to define the colour of light to which each cell of the CCD 10 is sensitive.

A preprocessing circuit part 20 separates the signal portions representing different colours in the image signal from the CCD 10, sets black and white levels of the image signal converted into an electrical signal, and linearises the signal. It will be appreciated that the amplitude of the electric signal, read from the CCD, at any point is a function of the intensity of red, green or blue (RGB) light, as the case may be, falling on the cell producing that part of the one-dimensional electronic image signal.

An analogue-to-digital(A/D) conversion part 30 converts the analogue signal from the preprocessing part into a digital image signal in dependence on a control signal of a control part 60.

A temporary memory 40 temporarily stores the output signal of the A/D conversion part 30 under the control of a memory control part 80.

A signal processing part 50 compresses the image signal stored in the temporary memory 40 according to a predetermined compression method, e.g. the JPEG (Joint Photographic coding Experts Group) method, and outputs the compressed signal.

The control part 60 outputs a synchronisation signal to a driving part 70, the preprocessing circuit 20, the A/D conversion part 30, and the memory control part 80, so that these elements operated in synchronism with each other.

The driving part 70 outputs a driving voltage to the CCD 10 according to the synchronisation signal outputted from the control part 60.

The memory control part 80 controls storage of the digital image signal in the temporary memory 40 according to the synchronisation signal and the output of the digital signal from the temporary memory 40 to the signal processing part 50.

A shift circuit part 90 shifts the CCD 10 up, down, left, and right according to the CCD driving voltage from the driving part 70 in order to scan the optical image formed by the lens over the CCD 10 in a predetermined manner. That is, the shift circuit part 90 horizontally and vertically shifts the CCD 10 according to the control signal from the control part 60 by a distance of a half pixel pitch (PX/2), one pixel pitch(PX), or one and a half pixel pitch(3PX/2) to produce a virtual image signal matrix having twice as many "pixels" as can be obtained using the conventional shift method.

The production of the image signal will now be described in detail.

Referring to Figure 5, a method of producing a high quality image in a digital still camera is performed by the control part 60. In the following, PX is the distance between adjacent pixels in the same row and PY is the distance between adjacent pixels in the same column.

A reference numeral (1) in Figure 5 denotes a first, initial position of a pixel of a 4 × 4 matrix of the CCD 10, (2) denotes a second position shifted by PX/2 from the first position (1), (3) denotes a third position shifted by PX from the first position and (4) denotes a fourth position shifted by 3PX/2 from the first position (1).

(5) denotes a fifth position shifted by PY/2 from the first position (1), (6) denotes a sixth position shifted by PX/2 + PY/2 from the first position (1), (7) denotes a seventh position shifted by PX + PY/2 from the first position (1) and (8) denotes an eighth position shifted by 3PX/2 + PY/2 from the first position (1).

(9) denotes a ninth position shifted by PY from the first position (1), (10) denotes a tenth position shifted by PX/2 + PY from the first position (1), (11) denotes a eleventh position shifted by PX + PY from the first position (1) and (12) denotes an twelfth position shifted by 3PX/2 + PY from the first position (1).

(13) denotes a thirteenth position shifted by 3PY/2 from the first position (1), (14) denotes a fourteenth position shifted by PX/2 + 3PY/2 from the first position (1), (15) denotes a fifteenth position shifted by PX + 3PY/2 from the first position (1) and (16) denotes a sixteenth position shifted by 3PX/2 + 3PY/2 from the first position (1).

The scanning is actually effected boustrophedonically in the order (1) → (2) → (3) → (4) → (8) → (7) → (6) → (5) → (9) → (10) → (11) → (12) → (16) → (15) → (14) → (13).

As stated above, every time the optical image signal is shifted relative to the CCD 10, the CCD's output is stored separately in the temporary memory 40. Thus, the CCD 10 is read 16 times to produce one complete image.

When all sixteen partial images have been stored in the temporary memory, the control part 60 controls the memory control part 80 to output the 16 sheets of image signal matrices stored in the temporary memory 40 to the signal process part 50. The sixteen partial image signals are combined by the signal processing part 50 to produce a single high quality image signal.

During capture of all sixteen partial images, the light intensity control, e.g. an iris control value, a shutter speed control value, an automatic gain control (AGC) value, and an automatic white balance (AWB) control value, is kept constant.

Through the above processes, one pixel of the CCD 10 is used 16 times to produce pixels of 16 partial images, the partial images are stored in the temporary memory 40, and the produced final image is compressed by the signal process part 50 to be stored on a storage medium.

In addition to the above method, various methods for shifting an optical image over the CCD 10 may be employed. An alternative to moving the CCD 10, as described above, is controlling an optical refraction device equipped between a lens and the CCD 10 to scan the optical image over the CCD 10.

Referring to Figures 6A, 6B and 6C, as compared to the conventional virtual matrix, the virtual image matrix produced by the present invention has many more "pixels". Consequently, a high quality image signal can be obtained without using an interpolation process. Figure 6A shows the "first" green pixels with solid lines and the green pixels at positions (2) to (16) with dotted lines. Figure 6B shows the "first" red pixels with solid lines and the green pixels at positions (2) to (16) with dotted lines. Figure 6C shows the "first" blue pixels with solid lines and the green pixels at positions (2) to (16) with dotted lines. It can be seen that information for red, green and blue is obtained for each "pixel" and that each "pixel" contributes twice for green.

Although the preferred embodiment of the invention has been described, it will be understood by those skilled in the art that the present invention should not be limited to the described preferred embodiment, but various changes and modifications can be made. For example, the present invention can be applied to a camcorder and a digital camcorder.

## Claims

1. A method of producing an image signal using an image sensor (10) having an array of image sensing cells and a colour filter for determining the colour to which cell of the image sensor (10) is sensitive, the filter being arranged such that the cells of one row are each sensitive to one colour of a cyclical sequence of colours repeating along the row, the method comprising: -
producing an optical image on the image sensor (10);
scanning the optical image relative to the image sensor (10);
taking the output of the image sensor (10) a plurality of times during said scanning; and
combining said outputs to produce a single image signal,
**characterised in that**
said scanning comprises moving said optical image relative to the image sensor (10) parallel to said row in n steps, each consisting of half the pitch length of the cells in said row, where n is one less than twice the number of colours in said sequence and the output of the sensor is taken before the first step and after each step.

2. A method according to claim 1, wherein the cells of said optical sensor are arranged in a two-dimensional array, the filter is arranged such that the cells of one column are each sensitive to one colour of a further cyclical sequence of colours repeating along the column, and said scanning comprises moving said optical image relative to the image sensor (10) parallel to a column in m steps, each consisting of half the pitch length of the cells in the column, where m is one less than twice the number of colours in said further sequence and the image is scanned parallel a row, for taking of the image sensor's output, in n steps before the first step parallel to said column and after each step parallel to said column.

3. A method according to claim 2, wherein image is scanned relative to the optical sensor boustrophedonically.

4. A method according to claim 2 or 3, wherein n is 3 and m is 3.

5. A method according to any preceding claim, wherein the image sensor is a charge coupled device.

6. An image signal generating apparatus comprising an image sensor (10) having an array of image sensing cells and a colour filter for determining the colour to which cell of the image sensor (10) is sensitive, the filter being arranged such that the cells of one row are each sensitive to one colour of a cyclical sequence of colours repeating along the row, image scanning means (70, 90) for scanning an optical image across the image sensor (10) and processing means (20, 30, 40, 50, 60, 80), wherein the processing means (20, 30, 40, 50, 60, 80) is configured to control the scanning means (70, 90) to scan an optical image relative to the image sensor (10), take the output of the image sensor (10) a plurality of times during said scanning, and combine said outputs to produce a single image signal, **characterised in that** said scanning comprises moving said optical image relative to the image sensor (10) parallel to said row in n steps, each consisting of half the pitch length of the cells in said row, where n is one less than twice the number of colours in said sequence and the output of the sensor is taken before the first step and after each step.

7. An apparatus according to claim 6, wherein the cells of said optical sensor (10) are arranged in a two-dimensional array, the filter is arranged such that the cells of one column are each sensitive to one colour of a further cyclical sequence of colours repeating along the column, and said scanning comprises moving said optical image relative to the image sensor (10) parallel to a column in m steps, each consisting of half the pitch length of the cells in the column, where m is one less than twice the number of colours in said further sequence and the image is scanned parallel a row, for taking of the image sensor's output, in n steps before the first step parallel to said column and after each step parallel to said column.

8. An apparatus according to claim 7, wherein image is scanned relative to the image sensor (10) boustrophedonically.

9. An apparatus according to claim 7 or 8, wherein n is 3 and m is 3.

10. An apparatus according to any one of claims 6 to 9, wherein the image sensor (10) is a charge coupled device.

11. A digital stills camera according to any one of claims 6 to 10.

12. A method for producing a high quality image in a camera that stores an original image signal outputted from a charge coupled device (CCD) in a temporary memory by shifting the original image signal by a certain distance in predetermined directions through a shift circuit part, composes and processes the image signal stored in the temporary memory to be recorded on a record medium or to be outputted to an image display device, characterized in that the original image signal outputted from the CCD is horizontally shifted by a distance corresponding to a pitch of N/2 pixels, a pitch of N pixels, and a pitch of 3N/2 pixels, and vertically shifted by a distance corresponding to a pitch of N/2 pixels, a pitch of N pixels, and a pitch of 3N/2 pixels, to produce an image signal matrix having the number of pixels of 2N than the number of pixels of the original image signal matrix.

13. The method as claimed in claim 12, comprising the steps of:
(1) storing in the temporary memory the original image signal outputted from the CCD, and storing image signal matrices in the temporary memory each of which is produced by horizontally shifting pixels of the stored original image signal at least more than once by a distance proportional to a pitch of N/2 pixels;
(2) storing in the temporary memory an image signal matrix produced by vertically shifting the pixels by a distance corresponding to a pitch of N/2 pixels from an end position while vertically shifting the pixels in the step (1);
(3) storing in the temporary memory image signal matrices produced by horizontally shifting the pixels at least more than once by a distance proportional to a pitch of N/2 pixels from a position of the pixels vertically shifted in the step (2);
(4) storing in the temporary memory an image signal matrix produced by vertically shifting the pixels by a distance corresponding to a pitch of N/2 pixels from an end position while horizontally shifting the pixels in the step (3);
(5) storing in the temporary memory image signal matrices produced by horizontally shifting the pixels at least more than once by a distance proportional to a pitch of N/2 pixels from a position of the pixels vertically shifted in the step (4);
(6) storing in the temporary memory an image signal matrix produced by vertically shifting the pixels by a distance corresponding to a pitch of N/2 pixels from an end position while horizontally shifting the pixels in the step (5); and
(7) storing in the temporary memory image signal matrices produced by horizontally shifting the pixels at least more than once by a distance proportional to a pitch of N/2 pixels from a position of the pixels vertically shifted in the step (6).

14. The method as claimed in claim 13, the step (1), (3), (5), or (7), comprising the substeps of:
storing in the temporary memory the original image signal outputted from the CCD, and storing in the temporary memory one sheet of image signal matrix produced by horizontally shifting the original image signal by a distance corresponding to a pitch of N/2 pixels;
storing in the temporary memory one sheet of image signal matrix produced by horizontally shifting the original image signal outputted from the CCD by a distance corresponding to a pitch of N pixels; and
storing in the temporary memory one sheet of image signal matrix produced by horizontally shifting the original image signal outputted from the CCD by a distance corresponding to a pitch of 3N/2 pixels.

15. The method as claimed in claim 12, wherein a light amount control state set upon capturing a first image signal when starting a capture of an image signal is maintained until capturing a last image signal.

16. The method as claimed in claim 15, wherein the light amount control state is controlled by at least more than one of an iris control value, a shutter speed control value, an automatic gain control (AGC) gain value, or an automatic white balance(AWB) control value.

17. A device for producing a high quality image in a camera for storing an original image signal outputted from a charge coupled device(CCD) in a temporary memory by shifting the original image signal by a certain distance in predetermined directions through a shift circuit part controlled by a control part, composing and processing the image signal stored n the temporary memory through a signal process part to be recorded on a record medium or to be outputted to an image display device, comprising:
the shift circuit part for storing in the temporary memory a plurality of image signal matrices produced by horizontally shifting the original image signal outputted from the CCD according to a control signal of the control part by a distance corresponding to a pitch of N/2 pixels, a pitch of N pixels, and a pitch of 3N/2 pixels, and for storing a plurality of image signal matrices produced by vertically shifting the original image signal by a distance corresponding to a pitch of N/2 pixels a pitch of N pixels, and a pitch of 3N/2 pixels; and
the signal process part for composing and processing more than one image signal matrix stored in the temporary memory, and for producing an image signal matrix having 2N times more pixels than pixels of the original image signal matrix outputted from the CCD.

18. The device as claimed in claim 17, wherein the shift circuit part stores in the temporary memory the original image signal outputted from the CCD and horizontally shifts pixels of the stored original image signal at least more than once by a distance proportional to a pitch of N/2 pixels, vertically shifts the pixels by a distance corresponding to a pitch of N/2 pixels from an end position while horizontally shifting the pixels, horizontally shifts the pixels at least more than once by a distance proportional to a pitch of N/2 pixels from a position of the vertically shifted pixels, vertically shifts the pixels by a distance corresponding to a pitch of N/2 pixels from an end position while horizontally shifting the pixels, horizontally shifts the pixels at least more than once by a distance proportional to a pitch of N/2 pixels from a position of the vertically shifted pixels, vertically shifts the pixels by a distance corresponding to a pitch of N/2 pixels from an end position while horizontally shifting the pixels, and horizontally shifts the pixels at least more than once by a distance proportional to a pitch of N/2 pixels from a position of the vertically shifted pixels.

19. The device as claimed in claim 18, wherein the horizontal shift of the pixels in the shift circuit part is performed by horizontally shifting the original image signal outputted from CCD by a distance corresponding to a pitch of N/2 pixels, horizontally shifting the original image signal outputted from the CCD by a distance corresponding to a pitch of N pixels, and horizontally shifting the original image signal outputted from the CCD by a distance corresponding to a pitch of 3N/2 pixels.

20. The device as claimed in claim 17, wherein the control part maintains a light amount control state set upon capturing a first image signal when starting a capture of an image signal until capturing a last image signal.

21. The device as claimed in claim 20, wherein the light amount control state is controlled by at least more than one of an iris control value, a shutter speed control value, an automatic gain control (AGC) gain value, or an automatic white balance (AWB) control value.
